# EUROPÄISCHE PATENTANMELDUNG

(11) **EP 1 892 548 A2**
(43) Veröffentlichungstag der Anmeldung: **27.02.2008**
(21) Anmeldenummer: 07016596.4
(22) Anmeldetag: 24.08.2007
(51) Int. Cl.: G02B 7/00, G02B 7/182

(54) **Vorrichtung zur gravitationskompensierten Lagerung eines Messobjekts**

(30) Priorität: 25.08.2006 DE 102006039820
(71) Anmelder: Carl Zeiss Optronics GmbH, 73447 Oberkochen (DE)
(72) Erfinder: Lenke, Ralf Dr., 73466 Lauchheim (DE)
(74) Vertreter: Raunecker, Klaus Peter

(57) **Zusammenfassung**

Eine Vorrichtung zur gravitationskompensierten Lagerung eines Messobjekts (2) ist mit einer Mehrzahl von Stützelementen (1), die jeweils an zumindest einem Punkt des Messobjekts (2) angreifen, wobei die Stützelemente (1) so ausgestaltet sind, dass sie eine bei kleinen Lageänderungen des Messobjekts (2) konstante Kraft ausüben. Die Stützelemente (1) sind dabei mit in einer Trägerflüssigkeit (7) angeordneten Schwimmkörpern (3) versehen.

## Beschreibung

Die Erfindung betrifft eine Vorrichtung zur gravitationskompensierten Lagerung von Messobjekten.

Insbesondere in der Astronomie werden seit Jahrzehnten optische Bauteile verwendet, die über eine beträchtliche Ausdehnung verfügen. Bei der Herstellung und insbesondere bei der Prüfung und Vermessung derartiger Bauteile liegt eine ständige Herausforderung darin, einen angemessenen Kompromiss zwischen der für die üblicherweise hochpräzise gefertigten Bauteile notwendigen Steifigkeit und eines möglichst geringen Gewichts zu finden. Darüber hinaus ist es wünschenswert, sowohl im Einsatz im Feld als auch in der Fertigung und Qualitätskontrolle dieser Bauteile eine Möglichkeit zur stabilen und präzisen Lagerung zu finden. In den deutschen Offenlegungsschriften DE 39 08 430 A1 und DE 36 03 217 A1 sind die genannten Probleme adressiert. Darüber hinaus wird die geschilderte Problematik in dem deutschen Patent DE 35 21 973 C1, sowie in der US-Patentanmeldung US 2002/0150399 A1 und dem US-Patent 3 761 158 behandelt. Ferner beschreibt die internationale Patentanmeldung WO 03036360 A1 eine Möglichkeit zur Lagerung eines Objektes, wobei das Objekt mittels pneumatischer Halterungen, die mit einem Vorratsgefäß hinreichend großen Volumens verbunden sind, gehaltert wird. Dabei führt das große Volumen des Vorratsgefäßes dazu, dass die Halterung bei kleinen Auslenkungen des Objektes auf dieses eine näherungsweise konstante Kraft ausübt. Problematisch bei der in der genannten Schrift vorgestellten Lösung ist allerdings die Notwendigkeit einer aufwändigen Steuerung der einzelnen pneumatischen Halteelemente.

Es ist damit Aufgabe der vorliegenden Erfindung, eine Vorrichtung zur gravitationskompensierten Lagerung eines Messobjekts zu schaffen, die eine stabile und präzise Lagerung des Messobjektes bei geringem apparativen Aufwand gewährleistet.

Diese Aufgabe wird durch die Vorrichtung mit den in Patentanspruch 1 aufgeführten Merkmalen gelöst; die Unteransprüche betreffen vorteilhafte Weiterbildungen und Ausgestaltungen der Erfindung.

Die erfindungsgemäße Vorrichtung zeigt eine Mehrzahl von Stützelementen, die jeweils an einem Punkt des Messobjektes angreifen, wobei die Stützelemente so ausgestaltet sind, dass eine bei kleinen Lageänderungen des Messobjekts konstante Kraft auf dieses ausgeübt wird; dies wird dadurch erreicht, dass die Stützelemente mit Schwimmkörpern versehen sind, die in einer Trägerflüssigkeit angeordnet sind. Das Messobjekt kann sich dabei in oder außerhalb der Flüssigkeit befinden. Unter kleinen Lageänderungen werden dabei insbesondere Änderungen kleiner als ca. 10 mm verstanden. Diese Lageänderungen verlaufen > 70%, insbesondere > 90 % in vertikaler Richtung. Durch den auf die Schwimmkörper wirkenden Auftrieb wird über die Stützelemente eine abstützende und gravitationskompensierende Kraft an einer Vielzahl von Punkten auf das Messobjekt ausgeübt. Mit anderen Worten wird das Messobjekt gedanklich in n Segmente aufgeteilt und jedes Segment wird durch ein Stützelement abgestützt. Dabei entspricht die von dem Stützelement ausgeübte Kraft gerade der auf das jeweilige Segment wirkenden Gewichtskraft bzw. der "Gewichtskraft minus Auftrieb" im Fall dass sich das Messobjekt in der Flüssigkeit befindet. Die Segmente können so gewählt sein, dass jedes von ihnen die selbe Gewichtskraft auf sein jeweiliges Stützelement ausübt; alternativ können Segmente mit unterschiedlicher Masse gewählt werden und die Stützelemente bzw. die ihnen jeweils zugeordneten Schwimmkörper entsprechend angepasst werden. Durch diese Maßnahme ergibt sich eine stabile Lagerung des Messobjekts, durch die insbesondere eine aus der Gravitationskraft herrührende Durchbiegung des Messobjektes wirksam vermieden wird. Besonders vorteilhaft lässt sich die geschilderte Vorrichtung dazu verwenden, Messobjekte zu lagern, die für einen späteren Einsatz unter den Bedingungen der Schwerelosigkeit vorgesehen sind. Gerade für derartige Messobjekte muss die Wirkung der Gravitation bei der Vermessung und Qualitätskontrolle besonders effektiv ausgeschaltet werden.

Die Schwimmkörper weisen eine Dichte auf, die geringer ist als die Dichte der sie umgebenden Trägerflüssigkeit. Die Schwimmkörper befinden sich bevorzugt vollständig unterhalb des Trägerflüssigkeitsspiegels. Bei vollständigem Untertauchen der Schwimmkörper in der Trägerflüssigkeit ist deren Auftriebskraft immer gleich.

Beispielsweise kann ein Messobjekt von ca. 200 x 100 x 0,5 mm und ca. 25 g Eigengewicht durch ca. 20 derartige Stützelemente mit ausreichender Stabilität und Präzision gelagert werden.

Eine vorteilhafte Wahl für die Form der Stützelemente besteht darin, dass diese als mindestens näherungsweise vertikal in der Trägerflüssigkeit beweglich angeordnete stabförmige Elemente ausgebildet sind. Um dabei die vertikale Orientierung der stabförmigen Elemente zu gewährleisten, kann eine Führungsvorrichtung verwendet werden, die beispielsweise aus zwei näherungsweise horizontal angeordneten Lochplatten mit einander jeweils gegenüberliegenden Löchern bestehen kann, wobei die stabförmigen Elemente gleitend durch die Löcher geführt sind. Dabei kann die Orientierung der stabförmigen Elemente von der Vertikalen bzw. der Lochplatten von der Horizontalen um einen Wert von 0°bis ca.10°, vorzugsweise um einen Wert von 0°bis ca.5° abweichen.

Um insbesondere während einer Messung die stabile Lage des Messobjektes zu gewährleisten, hat es sich bewährt, mindestens ein Halteelement, d.h. ein Stützelement ohne Schwimmkörper und feststehend auszubilden.

Eine vorteilhafte Variante zur Realisierung der Schwimmkörper besteht darin, diese als hohle Körper, insbesondere als Glaskörper, auszubilden. Derartige Körper können auf einfache Weise beispielsweise von einem Glasbläser hergestellt werden und sind in einer Vielzahl von Varianten verfügbar.

Zur Anpassung der aus dem Auftrieb der Schwimmkörper resultierenden Kraft hat es sich bewährt, Gewichte an den Stützelementen anzubringen, deren Dichte höher ist als die der umgebenden Trägerflüssigkeit; vor allem Bleigewichte sind für eine derartige Anwendung geeignet.

Eine Alternative hierzu besteht darin, die beispielsweise als hohle Glaskörper realisierten Schwimmkörper nach unten offen zu konstruieren und den inneren Hohlraum der Glaskörper mindestens teilweise mit einem Auftriebsmedium anzufüllen, dessen Dichte geringer ist als die der umgebenden Trägerflüssigkeit. Dabei kommt beispielsweise für das Auftriebsmedium ein Öl, Gas oder ein Festkörper in Betracht, während sich für die Trägerflüssigkeit Wasser anbietet. Diese Variante der Erfindung gestattet eine besonders einfache Möglichkeit, eine Anpassung der resultierenden Stützkraft vorzunehmen.

In einer ersten Alternative kann über die Menge des in dem hohlen Glaskörper vorhandenen Auftriebsmediums eine Feinabstimmung vorgenommen werden. Hierzu kann beispielsweise über eine Öffnung am Boden des Gefäßes, in dem sich die Vorrichtung befindet, Öl gezielt in die nach unten offenen Hohlräume eingebracht werden. Zur Verringerung der resultierenden Stützkraft kann das Öl durch eine Öffnung an der Oberseite des hohlen Glaskörpers abgelassen werden. Durch das in den Hohlraum nachströmende Wasser verringert sich dabei das Volumen des von den hohlen Schwimmkörpern verdrängten Wassers und damit die von dem Schwimmkörper ausgeübte Auftriebskraft. Dabei ist es auch denkbar, den Glaskörper mit zwei Hohlräumen auszustatten, von denen einer geschlossen ist und ein Gas, z.B. Luft, enthält und auf diese Weise den überwiegenden Anteil des notwendigen Auftriebs beisteuert, und der zweite Hohlraum durch den bereits vorstehend beschriebenen nach unten offenen Hohlraum gebildet ist, der es gestattet, über den in ihm herrschenden Ölstand eine Feinabstimmung der resultierenden Stützkraft vorzunehmen.

Eine zweite Variante zur Abstimmung der resultierenden Stützkraft besteht darin, nicht die Menge, sondern die Dichte des in dem nach unten offenen Glaskörper vorhandenen Öls mittels Temperaturänderung zu variieren: hierzu kann beispielsweise mittels eines Laserstrahls oder einer sonstigen Lichtquelle, deren Strahlung mindestens teilweise von dem in den Glaskörpern vorhandenen Öl absorbiert wird, das Öl aufgeheizt werden, wodurch sich die Dichte des Öls und damit der resultierende Auftrieb ändert. Diese Variante würde es gestatten, selektiv einzelne Glaskörper zu beleuchten und auf diese Weise Einfluss auf die an den zugeordneten Stützelementen anliegende resultierende Stützkraft zu nehmen.

Eine Alternative zu dieser Vorgehensweise besteht darin, an den Schwimmkörpern oder auch den Stützelementen nach oben offene Behälter anzubringen und diese mit einer Ballastflüssigkeit oder einem anderen Ballastmedium nach Bedarf zu füllen. Dabei kann, wenn sich die Öffnung der Behälter oberhalb des Flüssigkeitsspiegels der Trägerflüssigkeit befindet, ein Ballastmedium nahezu beliebiger Dichte verwendet werden.

Eine Möglichkeit, für sämtliche Stützelemente gleichmäßig die resultierende Stützkraft zu variieren, besteht darin, die Dichte der Trägerflüssigkeit zu verändern. Dies kann beispielsweise dadurch geschehen, dass die Konzentration eines in der Trägerflüssigkeit löslichen Stoffs, wie beispielsweise Natriumchlorid, in der Trägerflüssigkeit gezielt variiert wird oder die Temperatur der Trägerflüssigkeit und damit ihre Dichte verändert wird. Da die Schwimmkörper in der Regel einen von dem der Trägerflüssigkeit verschiedenen thermischen Ausdehnungskoeffizienten besitzen, ändert sich im Ergebnis der Auftrieb und damit die resultierende Stützkraft.

Nachfolgend wird ein Ausführungsbeispiel der Erfindung anhand der Figuren 1 bis 4 beschrieben. Dabei zeigen
- Figur 1:: einen Schnitt durch eine erfindungsgemäße Ausführungsform der Vorrichtung mit niedrigem Flüssigkeitsspiegel,
- Figur 2:: einen Schnitt durch eine erfindungsgemäße Ausführungsform der Vorrichtung mit hohem Flüssigkeitsspiegel,
- Figur 3:: eine Ansicht von oben auf die erfindungsgemäße Ausführungsform nach Figur 1, und
- Figur 4:: einen Ausschnitt der Vorrichtung nach den Figuren 1 und 2.

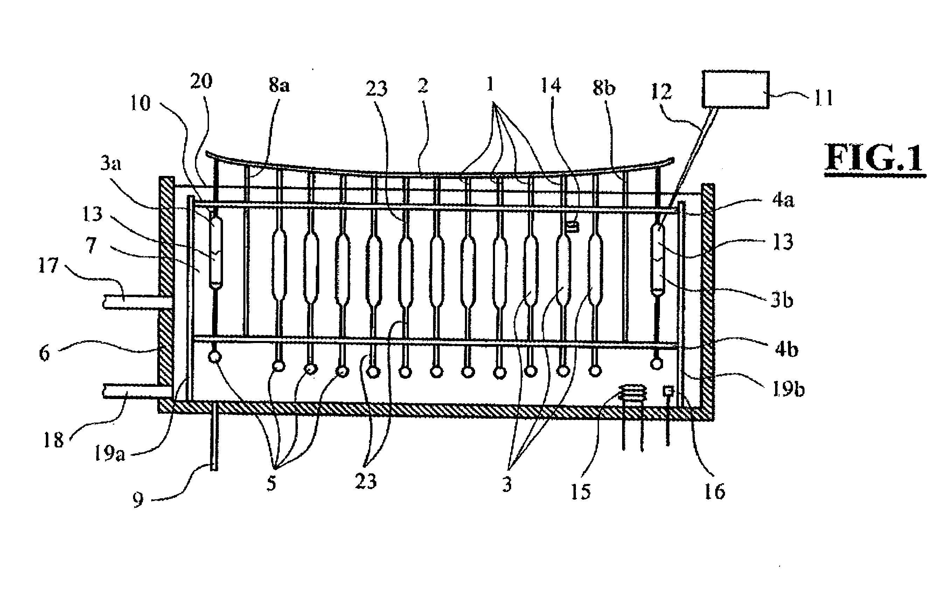

Der in Figur 1 dargestellte skizzenhafte Querschnitt durch die erfindungsgemäße Anordnung zeigt ein auf einer Vielzahl von schwimmenden Stützelementen 1 gelagertes Messobjekt 2. Die schwimmenden Stützelemente 1 weisen dabei jeweils einen Schwimmkörper 3 auf und sind über die feststehenden Führungsplatten 4a und 4b des Führungsgestells 22 in einer annähernd vertikalen Lage justiert. Anstelle eines Schwimmkörpers 3 können auch mehrere Schwimmkörper 3 pro Stützelement 1 vorgesehen sein. Die Führungsplatten 4a und 4b sind über Standbeine 19a bis 19d am Bassin feststehend angeordnet. Die feststehende Anordnung kann durch Eigengewicht oder eine Fixierung am Bassinboden oder der Bassinwand erfolgen.

An der Unterseite der Stützelemente 1 sind Bleigewichte 5 zur Anpassung der resultierenden Stützkraft lösbar oder fest angebracht. Die gesamte Anordnung befindet sich in dem Bassin 6, das mit einer Trägerflüssigkeit 7, wie beispielsweise Wasser, angefüllt ist. Zusätzliche Stabilität wird dem Messobjekt 2 durch die drei feststehenden Halteelemente, d. h. Stützelemente ohne Schwimmkörper, 8a, 8 und 8c verliehen. Diese drei Halteelemente 8a, 8b, 8c sind mit dem Stützgestell 22 fest verbunden. Es können auch mehr als drei solcher feststehender Halteelemente 8 vorgesehen sein.

Die Schwimmkörper können beispielsweise mit Gasen oder Flüssigkeiten geringerer Dichte als die Dichte der Umgebungsflüssigkeit 7 ausgebildet sein. Es sind auch Schwimmkörper aus Feststoffen vorstellbar.

Die Tragestäbe 23, die die Schwimmkörper 3 mit den Bleigewichten 5 und dem Messobjekt 2 verbinden sind aus stabilem Material, beispielsweise Stahl zu fertigen. Aufgrund der benötigten Stabilität kann für die Tragestäbe 23 ein Material höherer Dichte als die Dichte der Trägerflüssigkeit 7 eingesetzt werden.

Zusätzlich sind in Figur 1 weitere Varianten gezeigt, wie die von den Stützelementen 1 auf das Messobjekt 2 ausgeübte resultierende Kraft variiert werden kann. Dabei ist in einer ersten Variante der Schwimmkörper 3a als nach unten offener Schwimmkörper realisiert, in dessen unterem Teil sich die Auftriebsflüssigkeit 13, beispielsweise Öl mit geringerer Dichte als die der Trägerflüssigkeit 7, befindet; im oberen Bereich des Schwimmkörpers 3a befindet sich ein Luftpolster, dessen Volumen durch Betätigen des Ablaufs 10 angepasst werden kann. Selbstverständlich ist es auch denkbar, dass der Schwimmkörper 3a vollständig von der Auftriebsflüssigkeit 13 erfüllt ist oder gegebenenfalls sich im oberen Bereich des Schwimmkörpers 3a die Auftriebsflüssigkeit 13 befindet, während der untere Bereich des Schwimmkörpers 3a von der Trägerflüssigkeit 7 beansprucht wird. Dem Schwimmkörper 3a kann die Auftriebsflüssigkeit 13 durch die Zulauföffnung 9 zugeführt werden; dabei steigt die Auftriebsflüssigkeit 13 durch die umgebende Trägerflüssigkeit 7 in Richtung des Schwimmkörpers 3a auf und tritt durch die untere Öffnung des Schwimmkörpers 3a in diesen ein.

Im Unterschied hierzu wird die durch den Schwimmkörper 3b ausgeübte Stützkraft dadurch variiert, dass ein Laser 11 vorhanden ist, der das Innere des Schwimmkörpers 3b mit einem Laserstrahl 12 bestrahlt. Durch die Absorption der Energie des Laserstrahls 12 in der Auftriebsflüssigkeit 13 im Inneren des Schwimmkörpers 3b und ihre damit verbundene Aufheizung ändert sich die Dichte der Auftriebsflüssigkeit und damit das von ihr im Schwimmkörper 3b beanspruchte Teilvolumen. Im Ergebnis ergibt sich eine Variation der durch den Schwimmkörper 3b ausgeübten Stützkraft. Zusätzlich ist ein Behälter 14 dargestellt, der beispielsweise mit einer Ballastflüssigkeit gefüllt werden kann.
Ferner sind in den Figuren 1 zwei Möglichkeiten zur Variation der Dichte der Trägerflüssigkeit 7 dargestellt. In einer ersten Variante kann über den Zulauf 17 ein in der Trägerflüssigkeit 7 gelöster oder lösbarer Stoff zugeführt werden, so dass sich im Ergebnis die Dichte der Trägerflüssigkeit 7 ändert. Über den Ablauf 18 kann der Flüssigkeitsspiegel der Trägerflüssigkeit 7 in diesem Fall angepasst werden bzw. konstant gehalten werden.

Alternativ hierzu oder auch zusätzlich ist es denkbar, mittels der Heiz-/Kühlschlange 15 die Temperatur und damit im Ergebnis die Dichte der Trägerflüssigkeit 7 anzupassen. Mittels des Temperaturfühlers 16 kann dabei die Temperatur der Trägerflüssigkeit 7 über einen nicht dargestellten Regelkreis geregelt werden.

Das Messobjekt 2 kann in Luft oder einem Gas gelagert sein. Vorstellbar ist aber auch eine Lagerung in einer weiteren Flüssigkeit, die aufgrund geringerer Dichte auf der Trägerflüssigkeit 7 aufliegt.

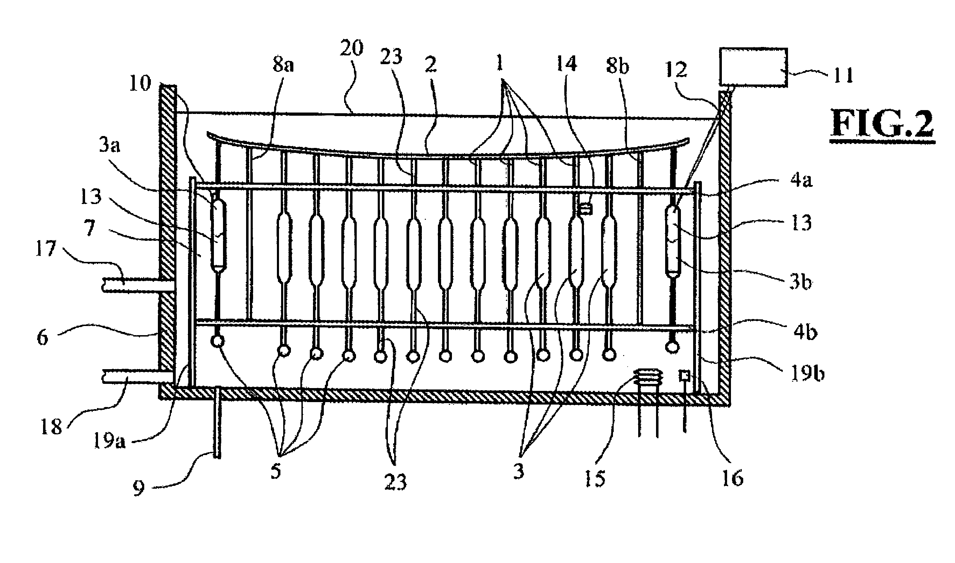

Figur 2 zeigt die Ausführungsform nach Figur 1, nun jedoch mit einem Flüssigkeitsspiegel 20 der so hoch ist, dass das Messobjekt 2 unterhalb des Flüssigkeitsspiegels liegt. Dabei ist das Messobjekt vor äußeren Einflüssen, beispielsweise Verschmutzung oder lokalen Temperaturschwankungen geschützt.

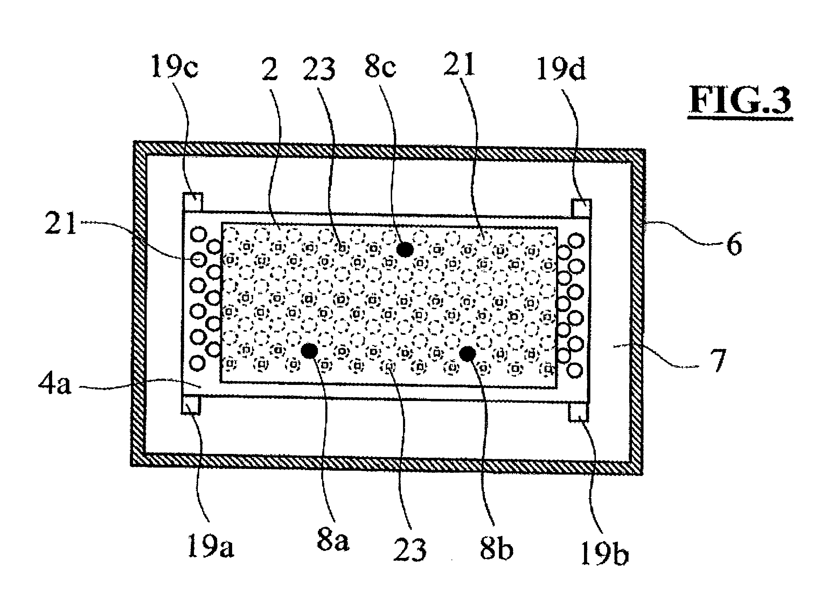

Figur 3 zeigt die Ausführungsform nach Figur 1 aus der Vogelperspektive. Es ist zu erkennen, dass in dem mit der Flüssigkeit 7 gefüllten Bassin 6 das Messobjekt 2 angeordnet ist. Bei dem Messobjekt 2 handelt es sich beispielsweise um einen transparenten rechteckigen und durchgebogenen Spiegel. Durch den Spiegel hindurch erkennbar sind die drei Halteelemente ohne Schwimmkörper 8a, 8b und 8c. Die Löcher 21 der obereren Führungsplatte 4a sind unterhalb des Spiegels gestrichelt dargestellt. Durch diese Löcher hindurch stützen die Stützelemente 1 das Messobjekt 2.

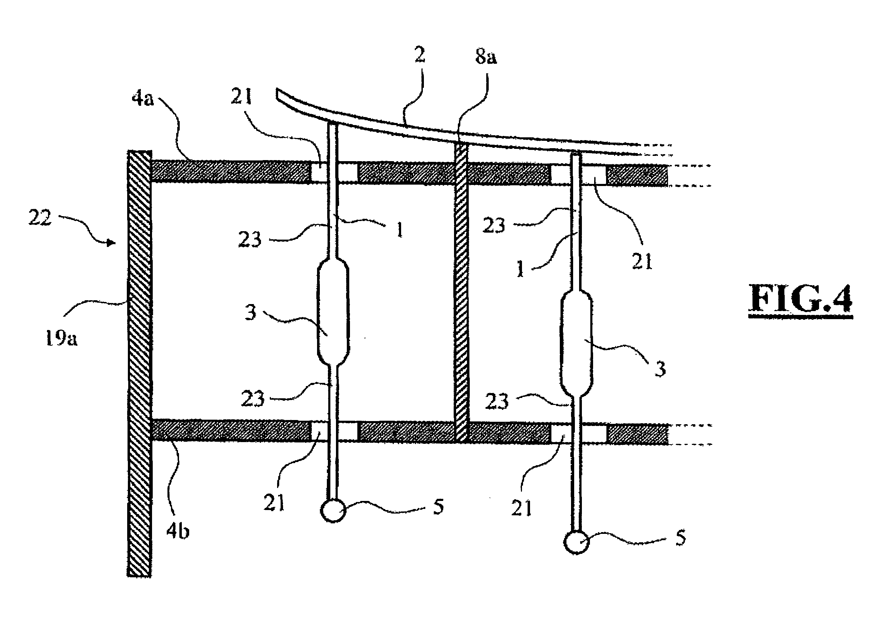

Figur 4 zeigt einen Ausschnitt der Ausführungsform nach Figur 1 und 2. Dabei sind das Führungsgestell 22 mit einem seiner Standbeine 19a, die beiden vielfach gelochten Führungsplatten 4a und 4b sowie ein am Führungsgestell 22 befestigtes schwimmkörperfreies Halteelement 8a dargestellt. Auf dem festen schwimmkörperfreien Halteelement 8a sowie ergänzend auf den zwei schwimmenden Stützelementen 1 mit Schwimmkörpern 3 liegt das Messobjekt 2 auf. Die schwimmenden Stützelemente 1 sind durch die Löcher 21 der Führungsplatten 4a und 4b zumindest annähernd senkrecht in der Flüssigkeit 7 des Bassins 6 geführt.

## Patentansprüche

1. Vorrichtung zur gravitationskompensierten Lagerung eines Messobjekts, mit einer Mehrzahl von Stützelementen, die jeweils an zumindest einem Punkt des Messobjekts angreifen, wobei die Stützelemente so ausgestaltet sind, dass sie eine bei kleinen Lageänderungen des Messobjekts konstante Kraft ausüben, **dadurch gekennzeichnet, dass** die Stützelemente (1) mit in einer Trägerflüssigkeit (7) befindlichen Schwimmkörpern (3) versehen sind.

2. Vorrichtung nach Anspruch 1, **dadurch gekennzeichnet, dass** die Stützelemente (1) als mindestens näherungsweise vertikal, insbesondere mit einer Abweichung von weniger als 5° oder 10° von der Vertikale, in der Flüssigkeit beweglich angeordnete stabförmige Elemente-ausgebildet sind.

3. Vorrichtung nach Anspruch 2, **dadurch gekennzeichnet, dass** zusätzlich eine Führungsvorrichtung (22) vorgesehen ist, durch die die Stützelemente (1) in ihrer näherungsweise vertikalen Lage gehalten werden.

4. Vorrichtung nach Anspruch 3, **dadurch gekennzeichnet, dass** die Führungsvorrichtung (22) zwei näherungsweise horizontale Lochplatten (4a,4b) mit einander gegenüberliegenden Löchern aufweist, durch die die Stützelemente (1) geführt sind.

5. Vorrichtung nach einem der vorangehenden Ansprüche, **dadurch gekennzeichnet, dass** mindestens ein feststehendes Halteelement, insbesondere drei Halteelemente (8a, 8b, 8c), vorgesehen ist.

6. Vorrichtung nach Anspruch 5, **dadurch gekennzeichnet, dass** das mindestens eine Halteelement (8a, 8b, 8c) an der Führungsvorrichtung (22) fest angeordnet ist.

7. Vorrichtung nach einem der vorangehenden Ansprüche, **dadurch gekennzeichnet, dass** die Schwimmkörper (3) als hohle mit einem Auftriebsmedium gefüllte Körper oder als Festkörperausgebildet sind.

8. Vorrichtung nach einem der vorangehenden Ansprüche, **dadurch gekennzeichnet, dass** zusätzliche Gewichte (5), insbesondere Bleigewichte, zur Anpassung der aus dem Auftrieb der Schwimmkörper (3) resultierenden Kraft vorhanden sind.

9. Vorrichtung nach Anspruch 7, **dadurch gekennzeichnet, dass** die Schwimmkörper (3) nach unten hin offen ausgebildet und mindestens teilweise mit einem Auftriebsmedium (13) mit geringerer Dichte als die der umgebenden Trägerflüssigkeit (7) gefüllt sind.

10. Vorrichtung nach Anspruch 9, **dadurch gekennzeichnet, dass** Mittel (9,10, 11, 12) zur Variation des von dem Auftriebsmedium (13) in den Schwimmkörpern (3) beanspruchten Volumens vorhanden sind.

11. Vorrichtung nach Anspruch 10, **dadurch gekennzeichnet, dass** Mittel (11,12) vorhanden sind, die Dichte des Auftriebsmediums (13) in den Schwimmkörpern (3) durch Temperaturänderung, insbesondere durch die Absorption elektromagnetischer Strahlung zu variieren.

12. Vorrichtung nach Anspruch 10 oder 11, **dadurch gekennzeichnet, dass** Mittel (9,10) vorhanden sind, dem Inneren der Schwimmkörper (3) das Auftriebsmedium (13) zuzuführen und/oder aus diesen abzulassen.

13. Vorrichtung nach einem der vorangehenden Ansprüche, **dadurch gekennzeichnet, dass** an wenigstens einem Stützelement (1) oder Schwimmkörper (3) wenigstens ein zusätzlicher Behälter (14) zum Befüllen mit Ballast definierter Dichte angebracht ist.

14. Vorrichtung nach einem der vorangehenden Ansprüche, **dadurch gekennzeichnet, dass** Mittel (15,16,17,18) zur Variation der Dichte der Trägerflüssigkeit (7) vorhanden sind.

15. Vorrichtung nach Anspruch 14, **dadurch gekennzeichnet, dass** Mittel (17,18) zur Variation der Konzentration eines in der Trägerflüssigkeit (7) gelösten Stoffes vorhanden sind.

16. Vorrichtung nach Anspruch 14 oder 15, **dadurch gekennzeichnet, dass** Mittel (15,16) zur Variation der Temperatur der Trägerflüssigkeit (7) vorhanden sind.

17. Vorrichtung nach einem der Ansprüche 7 bis 16, **dadurch gekennzeichnet, dass** als Auftriebsmedium Gase, Flüssigkeiten, Feststoffe oder Mischungen hiervon eingesetzt sind.
